# FASCICULE DE BREVET EUROPEEN

(11) **EP 1 316 251 B1**
(45) Date de publication et mention de la délivrance du brevet: **08.12.2004**
(21) Numéro de dépôt: 02290135.9
(22) Date de dépôt: 18.01.2002
(51) Int. Cl.: A01G 3/02, B25G 3/26, B26B 13/04

(54) **Outil de coupe ou analogue tel que sécateur comprenant deux organes actifs pivotants**
Schneidewerkzeug oder dergleichen, wie zum Beispiel Gartenschere, mit zwei schwenkbaren aktiven Elementen
Cutting tool or the like, such as pruning scissors, comprising two pivotable active elements

(30) Priorité: 30.11.2001 FR 0115545
(43) Date de publication de la demande: 04.06.2003
(73) Titulaire: Deville S.A., 49150 Bauge (FR)
(72) Inventeur: Deville, Antoine, 49150 Vieil-Bauge (FR)
(74) Mandataire: Rémont, Claude

(56) Documents cités:
- EP-A- 0 357 490
- FR-A- 2 712 522
- US-A- 2 941 294
- US-A- 5 454 165

## Description

La présente invention concerne un outil de coupe ou analogue tel que sécateur comprenant deux organes actifs tels que lame et contre-lame montés de manière pivotante autour d'un axe transversal commun.

On connaît de nombreux outils de coupe ou analogue du type précité, plusieurs de ces outils comprenant deux manches tubulaires permettant de disposer les poignées d'actionnement à distance de l'axe transversal commun pour augmenter, par effet de bras de levier, la force de coupe ou de pincement de l'outil.

On connaît en particulier un outil de coupe ou analogue du type précité dans lequel la partie arrière de chaque organe actif, lame ou contre-lame, est entourée par un élément intermédiaire sur lequel est enfilé un manche tubulaire, des moyens étant prévus pour fixer chaque manche tubulaire à la partie arrière de l'organe actif correspondant.

Dans cet outil connu, l'élément intermédiaire est en deux parties séparées par un plan longitudinal et est inséré à l'intérieur du manche tubulaire, et on introduit à force la partie arrière de l'organe actif correspondant qui à une forme sensiblement conique de façon à appliquer à force les deux parties de l'élément intermédiaire contre les parois intérieures du manche tubulaire.

Ce mode de réalisation, qui donne toute satisfaction, nécessite une force importante pour monter l'outil comme pour le démonter en vue du remplacement de chaque organe actif, lame ou contre-lame dans le cas d'un sécateur.

Un outil selon le préambule de la revendication 1 est connu du document US-A-5 454 165.

Le but de la présente invention est de proposer un outil de coupe ou analogue du type précité permettant un montage et un démontage faciles du manche sur l'organe actif correspondant sans diminuer la fiabilité du mode de fixation du manche sur ledit organe actif.

Le but de l'invention est également d'alléger la tête de l'outil de coupe ou analogue du côté des organes actifs, en supprimant cet élément intermédiaire en deux parties.

Suivant la présente invention, l'outil de coupe ou analogue du type précité est caractérisé en ce que la partie arrière de chaque organe actif à en section transversale une hauteur plus grande que sa largeur, en ce que l'élément intermédiaire correspondant est réalisé par surmoulage autour de ladite partie arrière, et en ce que ladite partie arrière et ledit élément intermédiaire correspondant sont traversés par au moins deux trous traversants pour le passage d'un élément de fixation tel qu'une vis pour fixer le manche tubulaire correspondant.

Contrairement à l'enseignement de l'art antérieur précité qui recommandait un montage en force par serrage de l'élément intermédiaire à l'intérieur du manche tubulaire, la présente invention utilise le fait que la réalisation de l'élément intermédiaire par surmoulage autour de la partie arrière de chaque élément actif, avec réservation d'au moins deux trous traversants pour le passage d'un élément de fixation tel qu'une vis, permet d'obtenir pour l'élément intermédiaire des dimensions suffisamment précises et régulières pour garantir un jeu suffisant permettant d'enfiler le manche tubulaire sur l'élément intermédiaire , ce jeu ne risquant pas d'être excessif au point de devenir gênant et néfaste lors de l'utilisation de l'outil.

On peut alors fixer le manche tubulaire sur l'élément intermédiaire par au moins deux éléments de fixation tel que des vis traversant le manche tubulaire et l'élément intermédiaire.

Suivant un mode de réalisation préféré de l'invention, chaque élément intermédiaire comporte d'un même côté de la partie arrière correspondante, autour de chaque trou traversant, une cavité permettant de loger un écrou adapté à coopérer avec une vis correspondante.

L'écrou se trouve ainsi bloqué dans cette cavité lorsque l'on enfile le manche tubulaire sur l'élément intermédiaire, et ne constitue plus un obstacle à l'extérieur du manche tubulaire.

On utilise ainsi, de préférence, une vis dont la longueur est choisie pour ne pas dépasser de l'écrou lorsqu'elle est vissée dans celui-ci. Le manche tubulaire peut ainsi être percé d'un seul trou pour le passage de chaque vis, le manche étant efficacement serré contre l'élément intermédiaire par le serrage de la vis, ce qui supprime tous les jeux dans la transmission des efforts entre le manche tubulaire et l'élément intermédiaire correspondant.

D'autre particularités et avantages apparaîtront dans la description détaillé ci-après.

Aux dessins annexés, donnés uniquement a titre d'exemples non limitatifs :

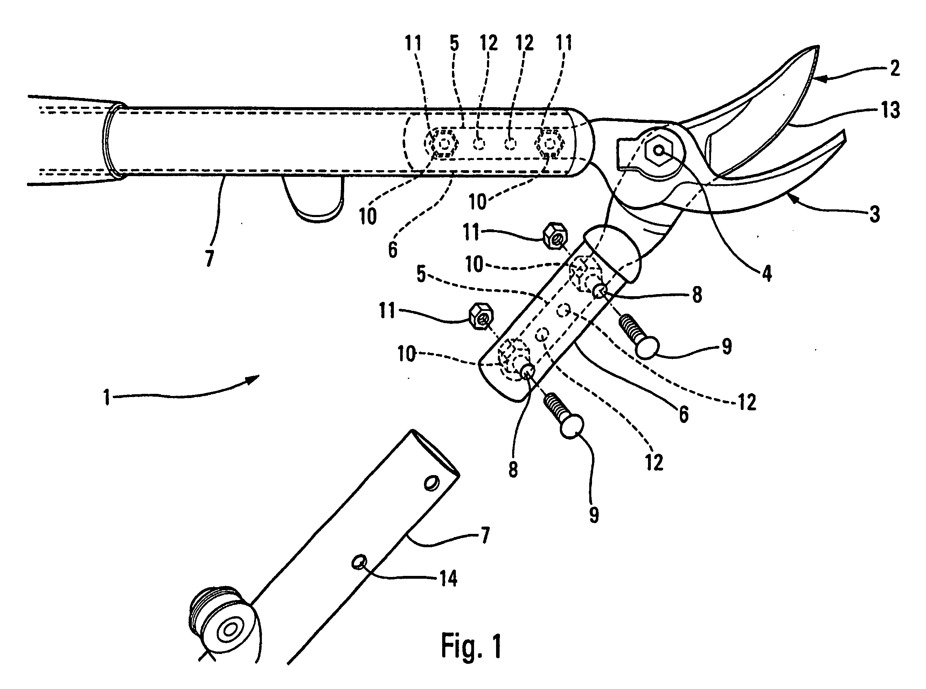

- la figure 1 est une vue schématique en perspective éclatée d'un mode de réalisation d'un outil de coupe ou analogue suivant la présente invention ;
- la figure 2 est une vue schématique en perspective d'un organe actif de l'outil de la figure 1.

Dans le mode de réalisation représenté aux figures, l'outil de coupe 1 est un sécateur 1 comprenant deux organes actifs, ici une lame 2 et une contre-lame 3, montés de manière pivotante autour d'un axe transversal 4 commun.

La partie arrière 5 de chaque organe actif 2,3 est entourée par un élément intermédiaire 6 sur lequel est enfilé un manche tubulaire 7, des moyens étant prévus pour fixer chaque manche tubulaire 7 à la partie arrière 5 de l'organe actif 2,3 correspondant.

Suivant la présente invention, la partie arrière 5 de chaque organe actif 2,3 a en coupe transversale une hauteur H plus grande que sa largeur L. l'élément intermédiaire 6 correspondant est réalisé par surmoulage de matière plastique autour de ladite partie arrière 5. La partie arrière 5 et l'élément intermédiaire 6 correspondant sont traversés par au moins deux trous traversants 8 dont chacun est prévu pour le passage d'un élément de fixation 9 tel qu'une vis ou un rivet pour fixer le manche tubulaire 7 correspondant.

Dans le mode de réalisation représenté aux figures, chaque élément intermédiaire 6 comporte d'un même côté de la partie arrière 5 correspondante, autour de chaque trou traversant 8, une cavité 10 de contour hexagonal permettant de loger et retenir un écrou 11 adapté à coopérer avec une vis correspondante 9.

L'outil 1 comprend en outre des moyens pour fixer l'élément intermédiaire 6 à la partie arrière 5 correspondante.

Dans cet exemple, la partie arrière 5 comprend au moins un trou traversant 12 adapté à être rempli de matière plastique lors du démoulage.

La matière plastique utilisée pour réaliser chaque élément intermédiaire 6 par surmoulage est une matière plastique connue en elle-même adaptée à une telle opération.

Cette matière plastique est notamment choisie de manière à obtenir pour l'élément intermédiaire 6 réalisé par surmoulage des dimensions précises et régulières, stables et fiables, de manière à obtenir entre l'élément intermédiaire 6 et le manche tubulaire 7 correspondant un jeu suffisant pour permettre d'enfiler facilement le manche tubulaire 7 sur l'élément intermédiaire 6 sans être excessif pour gêner l'utilisation de l'outil 1.

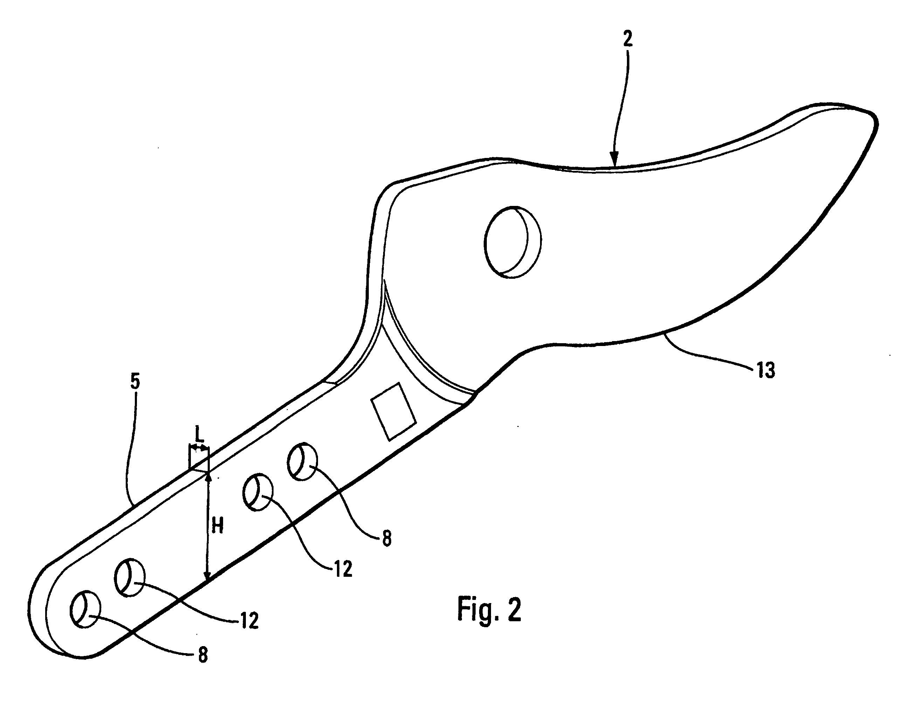

Dans l'exemple représenté à la figure 2, la lame 2 est réalisée à partir d'une tôle d'acier par formage à la presse et meulage de son bord coupant 13.

La partie arrière 5 de la lame 2 a en coupe transversale une forme rectangulaire tout à fait adaptée à un maintien efficace de l'élément intermédiaire 6 surmoulé sur cette partie arrière. On peut toutefois donner à cette partie arrière 5 toute autre forme appropriée.

De préférence, la partie arrière de la contre-lame 3 est identique à celle de la lame 2 bien que ceci n'ait aucun caractère obligatoire.

De façon classique, chaque manche tubulaire 7 est un tube en métal, par exemple en aluminium, dont la forme intérieure est adaptée à la forme extérieure de l'élément intermédiaire 6, et est avantageusement de section ronde.

Pour chaque vis 12, chaque manche 7 est percé d'un seul trou 14 pour l'introduction de la vis 12 qui ne ressort pas de l'autre côté du manche 7.

Pour réaliser un outil de coupe selon la présente invention, on réalise d'abord les deux organes actifs, par exemple la lame 2 et la contre-lame 3, qui présentent chacune dans leur partie arrière au moins deux trous 8 adaptés à recevoir chacun une vis 9 et un moins un trou auxiliaire 12 pour le passage de la matière plastique lors du surmoulage.

En vue du surmoulage, on adapte sur chaque partie arrière 5 un bouchon (non représenté) pour ménager la cavité 10 adaptée à recevoir un écrou 11 et le trou 8 correspondant à travers la matière plastique de l'élément intermédiaire 6.

On procède ensuite au surmoulage de la matière plastique pour former l'élément intermédiaire 6. On enlève les bouchons précités, et on introduit dans chaque cavité 10 un écrou 11. On enfile ensuite un manche tubulaire 7 sur l'élément intermédiaire 6, puis on introduit une vis 12 dans chaque trou 14 du manche 7 pour serrer le manche 7 contre l'élément intermédiaire 6 par serrage de la vis 9 dans l'écrou 11.

En cas d'usure de la lame 2 ou de la contre-lame 3, on retire les vis 12,on retire la lame 2 ou la contre-lame 3 usée, et on remet en place une lame 2 ou une contre-lame 3 neuve, munie de l'élément intermédiaire 6 surmoulé, après avoir introduit les écrous 11 dans les cavités 10 correspondantes, puis on enfile le manche tubulaire 7 et on met en place les vis 12.

Bien entendu, la présente invention n'est pas limitée aux modes de réalisations que l'on vient de décrire, et on peut apporter à ceux-ci de nombreux changements et modifications sans sortir du domaine de l'invention.

## Revendications

1. Outil de coupe (1) ou analogue tel que sécateur, comprenant deux organes actifs (2,3) tels que lame (2) et contre-lame (3) montés de manière pivotante autour d'un axe transversal (4) commun, la partie arrière (5) de chaque organe actif (2,3) étant entourée par un élément intermédiaire (6) sur lequel est enfilé un manche tubulaire (7), et des moyens étant prévus pour fixer chaque manche tubulaire (7) à la partie arrière (5) de l'organe actif (2,3) correspondant, la partie arrière (5) de chaque organe actif (2,3) ayant en section transversale une hauteur (H) plus grande que sa largeur (L), **caractérisé en ce que** l'élément intermédiaire (6) correspondant est réalisé par surmoulage autour de ladite partie arrière (5), et **en ce que** ladite partie arrière (5) et ledit élément intermédiaire (6) correspondant sont traversés par au moins deux trous traversants (8) pour le passage d'un élément de fixation (9) tel qu'une vis pour fixer le manche tubulaire (7)correspondant.

2. Outil selon la revendication 1, **caractérisé en ce que** chaque élément intermédiaire (6) comporte d'un même côté de la partie arrière (5) correspondante, autour de chaque trou traversant (8), une cavité (10) permettant de loger un écrou (11) adapté à coopérer avec une vis (9) correspondante.

3. Outil selon la revendication 1 ou 2, **caractérisé en ce qu'**il comprend des moyens pour fixer l'élément intermédiaire (6) à la partie arrière (5) correspondante.

4. Outil selon la revendication 3, **caractérisé en ce que** la partie arrière (5) comprend au moins un trou traversant auxiliaire (12) adapté à être rempli de matière plastique lors du surmoulage.

5. Outil selon l'une quelconque des revendications précédentes, **caractérisé en ce que** la matière plastique utilisée pour réaliser l'élément intermédiaire (6) par surmoulage est choisie de manière à obtenir pour l'élément intermédiaire (6) des dimensions précises et régulières.

## Claims

1. Cutting tool (1) or the like, such as pruning scissors, comprising two active elements (2, 3), such as blade (2) and counterblade (3), mounted in a pivoting manner about a common transverse spindle (4), the rear part (5) of each active element (2, 3) being surrounded by an intermediate piece (6) over which a tubular sleeve (7) is fitted, and means being provided for fastening each tubular sleeve (7) to the rear part (5) of the corresponding active element (2, 3), the rear part (5) of each active element (2, 3) having, in cross section, a height (H) which is greater than its width (L), **characterized in that** the corresponding intermediate piece (6) is produced by overmoulding around the said rear part (5), and **in that** the said rear part (5) and the said corresponding intermediate piece (6) are traversed by at least two through holes (8) for the passage of a fastening piece (9), such as a screw, for fastening the corresponding tubular sleeve (7).

2. Tool according to Claim 1, **characterized in that** each intermediate piece (6) comprises, on the same side of the corresponding rear part (5), around each through hole (8), a cavity (10) for housing a nut (11) designed to collaborate with a corresponding screw (9).

3. Tool according to Claim 1 or 2, **characterized in that** it comprises means for fastening the intermediate piece (6) to the corresponding rear part (5).

4. Tool according to Claim 3, **characterized in that** the rear part (5) comprises at least one auxiliary through hole (12) designed to be filled with plastic during overmoulding.

5. Tool according to any one of the preceding claims, **characterized in that** the plastic used for producing the intermediate piece (6) by overmoulding is chosen so as to obtain precise, uniform dimensions for the intermediate piece (6).

## Patentansprüche

1. Schneidwerkzeug (1) oder analoges Werkzeug, wie eine Gartenschere, mit zwei aktiven Organen (2, 3) wie eine Klinge (2) und eine Gegenklinge (3), die schwenkbar um eine gemeinsame Querachse (4) angeordnet sind, wobei der hintere Bereich (5) jedes aktiven Organs (2, 3) von einem Zwischenelement (6) umgeben ist, auf welches ein röhrenförmiger Handgriff (7) aufgeschoben ist, und wobei Vorrichtungen vorgesehen sind, um jeden röhrenförmigen Handgriff (7) an dem hinteren Bereich (5) des entsprechenden aktiven Organs (2) zu befestigen, wobei der hintere Bereich (5) jedes aktiven Organs (2, 3) im Querschnitt eine größere Höhe (H) aufweist als seine Breite (L), **dadurch gekennzeichnet, dass** das entsprechende Zwischenelement (6) durch Umformen um den hinteren Bereich (5) herum hergestellt wird, und dass der hintere Bereich (5) und das entsprechende Zwischenelement (6) von zumindest zwei Durchgangslöchem (8) durchquert sind für den Durchgang eines Befestigungselementes (8), wie einer Schraube, um den entsprechenden röhrenförmigen Handgriff (7) zu befestigen.

2. Werkzeug gemäß Anspruch 1, **dadurch gekennzeichnet, dass** jedes Zwischenelement (6) auf derselben Seite des entsprechenden hinteren Bereiches (5) um jedes Durchgangsloch (8) herum einen Hohlraum (10) aufweist, der ermöglicht, eine Mutter (11) zu lagern, die dafür eingerichtet ist, mit einer entsprechenden Schraube (9) zusammenzuwirken.

3. Werkzeug gemäß Anspruch 1 oder 2, **dadurch gekennzeichnet, dass** es Vorrichtungen zur Befestigung des Zwischenelementes (6) an dem entsprechenden hinteren Bereich (5) aufweist.

4. Werkzeug gemäß Anspruch 3, **dadurch gekennzeichnet, dass** der hintere Bereich (5) zumindest ein Nebendurchgangsloch (12) aufweist, das dafür eingerichtet ist, während des Umformens mit Plastikmaterial gefüllt zu werden.

5. Werkzeug gemäß irgendeinem der vorherigen Ansprüche, **dadurch gekennzeichnet, dass** das Plastikmaterial, das zur Herstellung des Zwischenelementes (6) durch Umformen eingesetzt wird, derart gewählt wird, dass für das Zwischenelement (6) genaue und regelmäßige Abmessungen erhalten werden.
